# EUROPEAN PATENT APPLICATION

(11) **EP 3 415 791 A1**
(43) Date of publication of application: **19.12.2018**
(21) Application number: 16889819.5
(22) Date of filing: 10.02.2016
(51) Int. Cl.: F16H 25/22

(54) **BALL-RECIRCULATING TUBE AND BALL SCREW DEVICE**

(71) Applicant: NSK Ltd., Shinagawa-ku Tokyo 141-8560 (JP)
(72) Inventor: YAMAMOTO, Shinpei, Fujisawa-shi Kanagawa 252-0811 (JP); KOBAYASHI, Shigeharu, Ukiha-shi Fukuoka 839-1405 (JP)
(74) Representative: Poskett, Oliver James
(86) International application number: PCT/JP2016/053976
(87) International publication number: WO 2017/138117

(57) **Abstract**

A ball recirculation tube (4) forms a passage connecting two separated portions of a ball-rolling passage of a ball screw device (1) to cause balls (6) to recirculate. An outer portion (4a, 4b) of the ball recirculation tube (4) that constitutes an outer end located radially farthest from the center axis of a screw shaft (2) has an adjustable portion used to adjust the distance from the center axis of the screw shaft (2) to the outer end. This facilitates attachment of a member fitted on a nut and the ball recirculation tube (4).

## Description

### TECHNICAL FIELD

The present invention relates to a ball screw device used as a mechanical component that translates rotational motion to linear motion in various apparatuses, such as a steering apparatus, an apparatus for moving heavy objects, a machining apparatus, and a precise positioning apparatus.

### BACKGROUND ART

There are conventional ball screw devices having a nut, a ball recirculation tube, and a metal sleeve that circumferentially encloses the nut and the recirculation tube to fix the ball recirculation tube to the nut, as taught by the invention disclosed in Patent Literature 1.

Patent Literature 1: Japanese Patent Application Laid-Open No. H10-141465

### SUMMARY OF INVENTION

The prior art ball screw device requires some effort in adjusting the depth of a groove cut on the nut to which the ball recirculation tube is fitted and adjustment of the outer diameter of the nut so that the inner circumferential surfaces of parts such as a rotor and the sleeve that encloses the ball recirculation tube and the nut will be in appropriate contact with the ball recirculation tube and the nut.

An object of the present invention is to provide a ball recirculation tube that enables easy attachment of a part attached outside the nut and the ball recirculation tube and a ball screw device.

To solve the above problems, according to the present invention, there is provided a ball recirculation tube for use in a ball screw device including a screw shaft provided with a helical first ball-rolling groove on its outer circumference, a nut having a cylinder part provided with a second ball-rolling groove facing said first ball-rolling groove on its inner circumferential surface, inside which said screw shaft passes, and a plurality of balls received in a ball-rolling passage formed by said first ball-rolling groove and said second ball-rolling groove, forming a passage that connects two separated portions of said ball-rolling passage to let said balls recirculate, characterized in that an outer end portion of the ball circulation tube that constitutes an outer end located radially farthest from the center axis of said screw shaft when the ball recirculation tube is attached to said ball screw device has an adjustable portion used to adjust the distance from said center axis to said outer end.

It is preferred that said outer end portion be a projection.

It is preferred that said outer end portion be a thickened portion having a thickness larger than the other portions.

To solve the above problem, according to the present invention, there is provided a ball screw device characterized by comprising:
a screw shaft provided with a helical first ball-rolling groove on its outer circumference;
a nut having a cylinder part provided with a second ball-rolling groove facing said first ball-rolling groove on its inner circumferential surface, inside which said screw shaft passes;
a plurality of balls received in a ball-rolling passage formed by said first ball-rolling groove and said second ball-rolling groove; and
a ball recirculation tube that forms a passage connecting two separated portions of said ball-rolling passage to let said balls recirculate,
wherein an outer end portion of the ball recirculation tube that constitutes an outer end located radially farthest from the center axis of said screw shaft has an adjustable portion used to adjust the distance from said center axis to said outer end.

It is preferred that said outer end portion be a projection.

It is preferred that said outer end portion be a thickened portion having a thickness larger than the other portions.

It is preferred that the ball screw device further comprise a fixing member that fixes said ball recirculation tube to said nut.

It is preferred that said fixing member have a fixing portion that covers a portion of said ball recirculation tube from radially outside and an attaching portion integral with said fixing portion attached to said cylinder part and that the radially outer surface of said fixing portion form a curved surface located on a cylindrical surface same as the outer circumferential surface of said cylinder part.

The present invention can provide a ball recirculation tube that enables easy attachment of a part attached outside the nut and the ball recirculation tube and a ball screw device.

### BRIEF DESCRIPTION OF DRAWINGS

Fig. 1 is a plan view of a ball screw device according to a first embodiment.
Fig. 2 is a schematic diagram showing a cross section of the ball screw device according to the first embodiment.
Fig. 3 is a schematic diagram showing a cross section of the ball screw device according to a second embodiment.
Fig. 4 is a schematic diagram showing a cross section of the ball screw device according to a third embodiment.
Fig. 5 is a plan view of a ball screw device according to a modification of the first embodiment.
Fig. 6 is a schematic diagram showing a cross section of the ball screw device according to the modification of the first embodiment.

### DESCRIPTION OF EMBODIMENTS

### First Embodiment

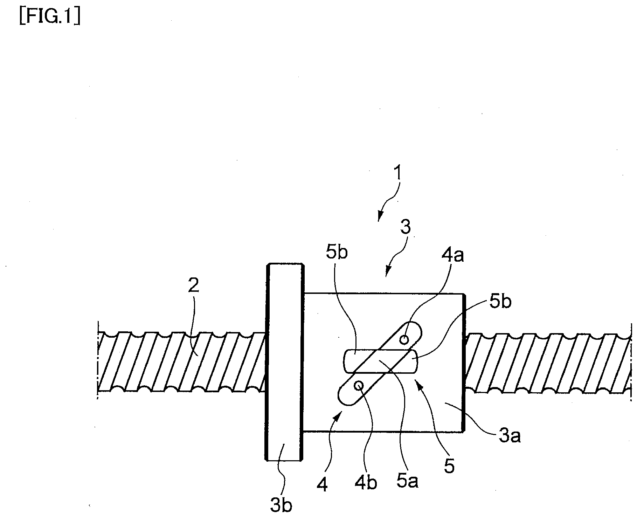

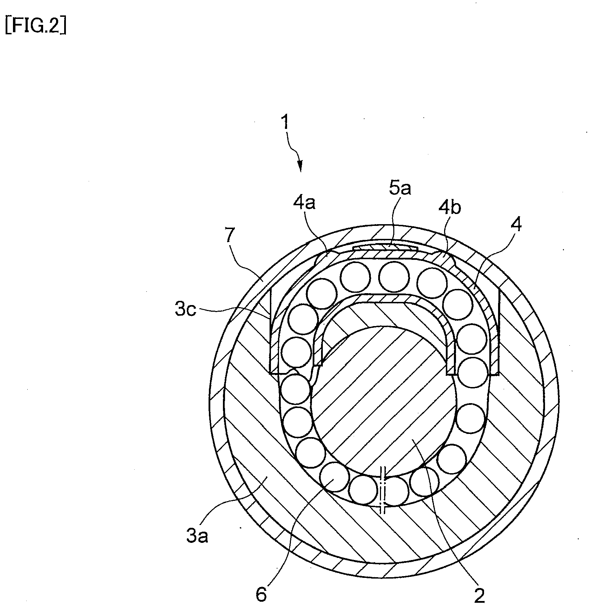

In the following, a ball screw device according to a first embodiment of the present application and a ball recirculation tube attached to the ball screw device will be described with reference to Figs. 1 and 2.

Fig. 1 is a plan view of the ball screw device 1 according to the first embodiment. The ball screw device 1 includes a screw shaft 2 having a helical first ball-rolling groove provided on its outer circumference, a nut 3 attached outside the screw shaft 2, a ball recirculation tube 4 attached to the nut 3 for recirculation of balls 6 (shown in Fig. 2), and a temporary retaining cap 5, which functions as a fixing member to fix the ball recirculation tube 4 to the nut 3.

The nut 3 has a cylinder part 3a having a cylindrical shape and a flange 3b that is integral with the cylinder part 3a on one end of the cylinder part 3a and extends radially outward. The inner circumferential surface of the nut 3 is provided with a second ball-rolling groove facing the aforementioned first ball-rolling groove provided on the outer circumferential surface of the screw shaft 2. The first ball-rolling groove and the second ball-rolling groove form a ball-rolling passage in which the balls 6 roll.

Fig. 2 is a schematic diagram showing a cross section of the ball screw device 1 according to the first embodiment. Fig. 2 shows a state in which a metal sleeve 7 is attached outside the nut 3 and the ball recirculation tube 4. The sleeve 7 is not a constituent part of the ball screw device 1 according to the first embodiment.

The balls 6 are received in the aforementioned ball-rolling passage. As the screw shaft 2 and the nut 3 rotate relative to each other about the center axis of the screw shaft 2, they move relative to each other in the direction in which the screw shaft 2 extends.

The cylinder part 3a of the nut 3 has a cut portion 3c. The ends of the cut portion 3c extend from the outer circumference to the inner circumference of the cylinder part 3a. The ball recirculation tube 4 is inserted in the cut portion 3c.

The ball recirculation tube 4 has a U-shape overall. The ball recirculation tube 4 has a hollow interior extending from one end to the other end. The ball recirculation tube 4 is inserted into the cut portion 3c of the nut 3 with its ends oriented to the cut portion 3c. Both ends of the ball recirculation tube 4 open to the ball-rolling passage. Thus, when the balls 6 having rolled in the ball-rolling passage with the relative rotation of the screw shaft 2 and the nut 3 reach one end of the ball recirculation tube 4, they are picked up by the ball recirculation tube 4 to enter the ball recirculation tube 4 and then exit from the other end. The ball-rolling passage and the ball recirculation tube 4 are arranged in this way to enable the balls 6 to circulate endlessly inside them.

Fig. 2 shows the ball recirculation tube 4 in a state in which it is fixed on the nut 3 by the sleeve 7. Before the attachment of the sleeve 7, the ball recirculation tube 4 is temporarily secured to the nut 3 by the temporary retaining cap 5.

The temporary retaining cap 5 has a securing portion 5a that covers the central portion of the ball recirculation tube 4 from radially outside with respect to the radial direction of the nut 3 and attaching portions 5b integral with the securing portion 5a on both sides thereof. As shown in Fig. 2, the thickness of the securing portion 5a of the temporary retaining cap 5 is so small that it does not reach the inner circumferential surface of the sleeve 7. In other words, the radially outer surface of the securing portion 5a of the temporary retaining cap 5 is located radially closer to the center axis than the outer circumferential surface of the cylinder part 3a.

The temporary retaining cap 5 can easily be attached to the nut 3 by engaging the attaching portions 5b to engagement portions provided on the nut 3. Thus, the ball recirculation tube 4 and the balls 6 can easily be prevented from detaching from the nut 3 of the ball screw device 1 before the sleeve 7 is attached to the nut 3, for example during transportation. Since the temporary retaining cap 5 is located radially inside the inner circumferential surface of the sleeve 7, the sleeve 7 can be attached without removing the temporary retaining cap 5. This can prevent the ball recirculation tube 4 from detaching on the occasion of attachment of the sleeve 7.

Conventionally, a cylindrical member has been used to cover the ball recirculation tube 4 and the nut 3 as a temporary retaining part for the ball recirculation tube 4. However, such a cylindrical member cannot be used in the ball screw device with a nut to be rotated, because the cylindrical member is incapable of transmitting torque due to its rotatability relative to the nut 3. In contrast, according to the first embodiment, a rotor or the like can be attached to the nut 3 in such a way as to enable torque transmission. Therefore, the ball screw device 1 can be used by rotating the nut.

The ball recirculation tube 4 has a pair of projections 4a, 4b that project radially outward with respect to the radial direction of the screw shaft 2 from the outer circumferential surface of the ball recirculation tube 4 at locations on both sides of the temporary retaining cap 5. Each projection 4a, 4b has a substantially hemispherical shape and a height that reaches a cylindrical surface identical with the outer circumferential surface of the cylinder part 3a of the nut 3. Hence, when the sleeve 7 is attached outside the nut 3, the projections 4a, 4b abut the inner circumferential surface of the sleeve 7.

In the above-described structure, the height of the projections 4a, 4b are adjusted so that the top of the projections 4a, 4b abut the inner circumferential surface of the sleeve 7, enabling the sleeve 7 to easily fix the ball recirculation tube 4 to the nut 3. In other words, the projections 4a, 4b that constitute the outer end portions located farthest from the center axis of the screw shaft 2 have an adjustable portion that allows adjustment for enabling fitting with the sleeve 7. This eliminates the need for adjusting a shape or dimension, such as the depth of the cut portion 3c of the nut 3, the outer diameter of the cylinder part 3a of the nut 3, and the shape of the inner circumferential surface of the sleeve 7 for attachment of the sleeve 7. The ball recirculation tube 4 having the above-described structure can be adapted to various outer diameters of the nut 3. To enable adjustment of the height of the projections 4a, 4b, the projections 4a, 4b may be prepared with their top located at a height radially beyond the inner circumferential surface of the sleeve 7, and the projections 4a, 4b may be cut appropriately taking account of the outer diameter of the nut 3 to which it is attached, the depth of the cut portion of the nut 3, manufacturing errors of the nut 7, and other factors.

### Second Embodiment

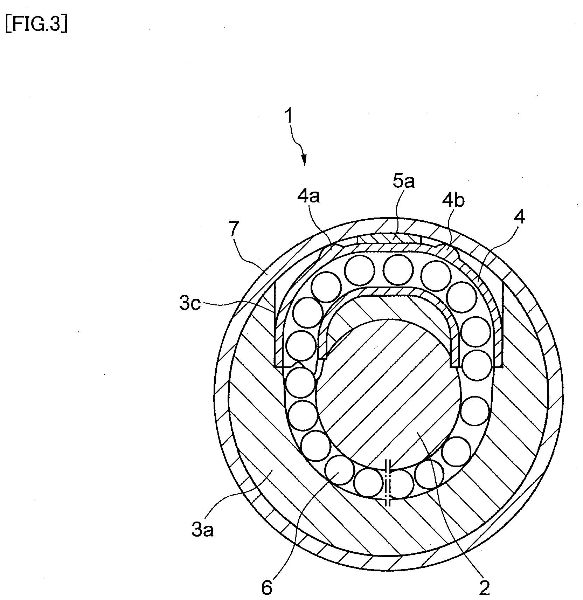

Next, a ball screw device 1 according to a second embodiment of the present invention will be described with reference to Fig. 3. The ball screw device 1 according to the second embodiment has a structure similar to the above-described ball screw device 1 according to the first embodiment except for the construction of the temporary retaining cap. In the description of the second embodiment, the parts equivalent to those in the above-described ball screw device 1 according to the first embodiment will be denoted by the reference numerals same as those in the first embodiment to eliminate redundant descriptions, and the structure of the temporary retaining cap 5 and an advantageous effect peculiar to the second embodiment will be described.

Fig. 3 is a schematic diagram showing a cross section of the ball screw device 1 according to the second embodiment. As shown in Fig. 3, the securing portion 5a of the temporary retaining cap 5 that is in contact with the ball recirculation tube 4 abuts the inner circumferential surface of the sleeve 7. Specifically, the radially outer surface of the securing portion 5a of the temporary retaining cap 5 has a curvature radius same as that of the outer circumferential surface of the cylinder part 3a of the nut 3 to form a curved surface located on a cylindrical surface the same as the outer circumferential surface of the cylinder part 3a of the nut 3.

According to the second embodiment, the temporary retaining cap 5 is in contact with the inner circumferential surface of the sleeve 7 by three portions, namely the two projections 4a, 4b, and the securing portion 5a. Thus, the second embodiment enjoys the advantageous effect of enhanced securing of the ball recirculation tube 4 in addition to the advantageous effect of the above-described first embodiment.

### Third Embodiment

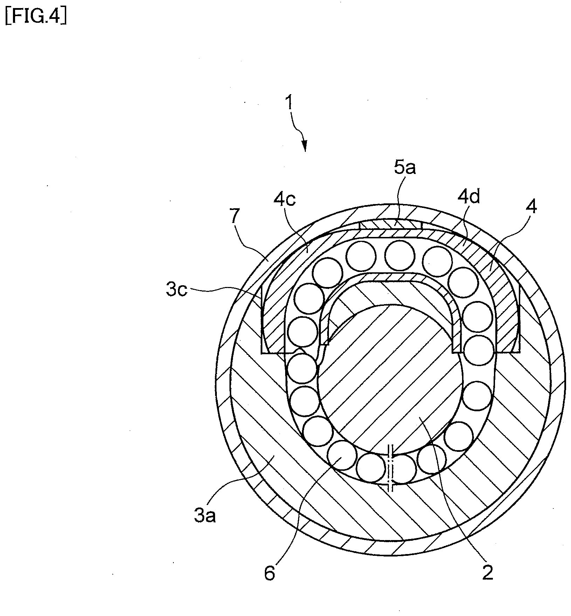

Next, a ball screw device 1 according to a third embodiment of the present invention will be described with reference to Fig. 4. The ball screw device 1 according to the third embodiment has a structure similar to the above-described ball screw device 1 according to the second embodiment except for the construction of the ball recirculation tube 4. In the description of the third embodiment, the parts equivalent to those in the above-described ball screw device 1 according to the second embodiment will be denoted by the reference numerals same as those in the second embodiment to eliminate redundant descriptions, and the structure of the ball recirculation tube 4 and an advantageous effect peculiar to the third embodiment will be described.

Fig. 4 is a schematic diagram showing a cross section of the ball screw device 1 according to the third embodiment. As shown in Fig. 4, the portion of the ball recirculation tube 4 that faces the sleeve 7 or located radially outside with respect to the screw shaft 2 has a thickness larger than the other portions, except for its central portion. In other words, the portion of the ball recirculation tube 4 that are located radially outside with respect to the screw shaft 2 has thickened portions 4c, 4d having an increasing thickness from the center toward both ends of the ball recirculation tube 4, and the thickness of the end portions gradually decreases toward the end face.

In the third embodiment, the thickened portions 4c, 4d serve as adjustable portions. Thus, the advantageous effect same as the above-described second embodiment can be enjoyed.

While specific embodiments have been described to facilitate understanding of the present invention, the present invention is not limited to the embodiments. It is possible to make various modifications and improvements to the embodiments.

For example, the shape of the projections 4a, 4b is not limited to that of the above-described embodiments. Various shapes may be employed so long as they serve as adjustable portions . For example, a conical shape or a semicircular column shape may be employed.

While in the above-described embodiments the temporary retaining cap 5 is used to temporarily secure the ball recirculation tube 4 on the nut 3, the temporary retaining means is not limited to this. In Particular in the first embodiment, in which the temporary retaining cap 5 is not in contact with the sleeve 7, other various temporary securing means may be employed.

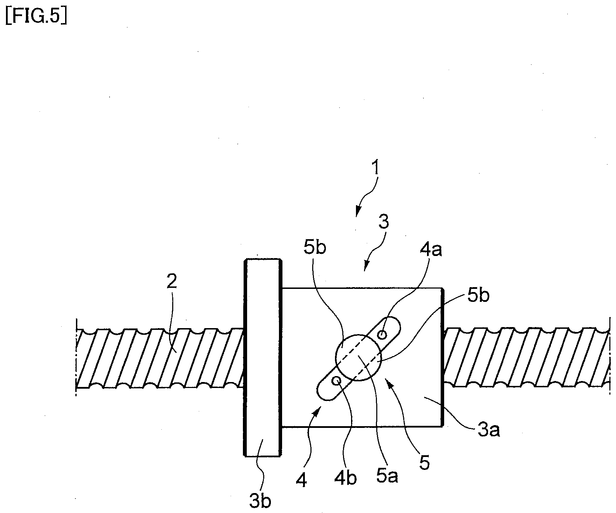

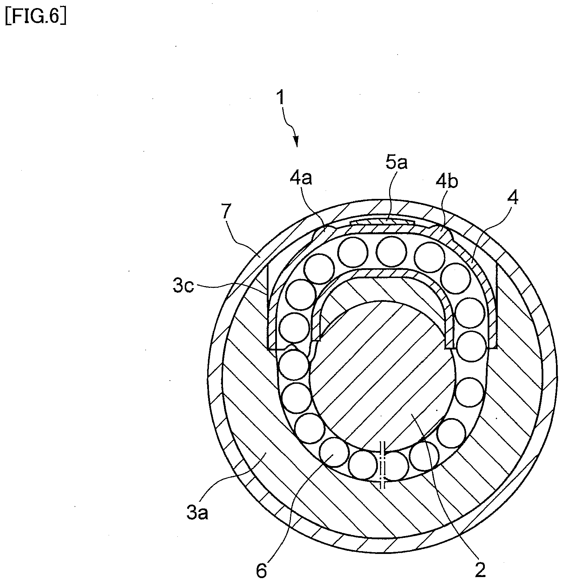

The temporary retaining cap 5 according to the above-described embodiments may be replaced by a temporary retaining cap 5 shown in Figs. 5 and 6, which has a circular shape in plan view and engages the nut 3 by its circular edge. This temporary retaining cap 5 can resist the force exerted by the ball recirculation tube 4 in the direction away from the nut 3 in a well-balanced manner in the circumferential direction.

As above, the present invention can provide a ball recirculation tube and a ball screw device that enable easy attachment of a part attached outside the nut and the ball recirculation tube.

### REFERENCE SIGNS LIST

1: ball screw device
2: screw shaft
3: nut
3a: cylinder part
3b: flange
3c: cut portion
4: ball recirculation tube
4a, 4b: projection
4c, 4d: thickened portion
5: temporary retaining cap
5a: securing portion
5b: attaching portion
6: ball
7: sleeve

## Claims

1. A ball recirculation tube for use in a ball screw device including a screw shaft provided with a helical first ball-rolling groove on its outer circumference, a nut having a cylinder part provided with a second ball-rolling groove facing said first ball-rolling groove on its inner circumferential surface, inside which said screw shaft passes, and a plurality of balls received in a ball-rolling passage formed by said first ball-rolling groove and said second ball-rolling groove, forming a passage that connects two separated portions of said ball-rolling passage to let said balls recirculate, **characterized in that** an outer end portion of the ball circulation tube that constitutes an outer end located radially farthest from the center axis of said screw shaft when the ball recirculation tube is attached to said ball screw device has an adjustable portion used to adjust the distance from said center axis to said outer end.

2. A ball recirculation tube according to claim 1, **characterized in that** said outer end portion is a projection.

3. A ball recirculation tube according to claim 1, **characterized in that** said outer end portion is a thickened portion having a thickness larger than the other portions.

4. A ball screw device **characterized by** comprising:
a screw shaft provided with a helical first ball-rolling groove on its outer circumference;
a nut having a cylinder part provided with a second ball-rolling groove facing said first ball-rolling groove on its inner circumferential surface, inside which said screw shaft passes;
a plurality of balls received in a ball-rolling passage formed by said first ball-rolling groove and said second ball-rolling groove; and
a ball recirculation tube that forms a passage connecting two separated portions of said ball-rolling passage to let said balls recirculate,
wherein an outer end portion of the ball recirculation tube that constitutes an outer end located radially farthest from the center axis of said screw shaft has an adjustable portion used to adjust the distance from said center axis to said outer end.

5. A ball screw device according to claim 4, **characterized in that** said outer end portion is a projection.

6. A ball screw device according to claim 4, **characterized in that** said outer end portion is a thickened portion having a thickness larger than the other portions.

7. A ball screw device according to any one of claims 4 to 6, **characterized by** further comprising a fixing member that fixes said ball recirculation tube to said nut.

8. A ball screw device according to any one of claims 4 to 7, **characterized in that** said fixing member has a fixing portion that covers a portion of said ball recirculation tube from radially outside and an attaching portion integral with said fixing portion attached to said cylinder part and that the radially outer surface of said fixing portion forms a curved surface located on a cylindrical surface same as the outer circumferential surface of said cylinder part.
